# FASCICULE DE BREVET EUROPEEN

(11) **EP 4 327 022 B1**
(45) Date de publication et mention de la délivrance du brevet: **28.01.2026**
(21) Numéro de dépôt: 22722321.1
(22) Date de dépôt: 15.04.2022
(51) Int. Cl.: F23R 3/20, F02K 3/10

(54) **DISPOSITIF D'INJECTION DE CARBURANT POUR POSTCOMBUSTION DE TURBORÉACTEUR**
KRAFTSTOFFEINSPRITZVORRICHTUNG FÜR NACHBRENNER EINES TURBOSTRAHLTRIEBWERKS
FUEL INJECTION DEVICE FOR A TURBOJET ENGINE AFTERBURNER

(30) Priorité: 19.04.2021 FR 2103991
(43) Date de publication de la demande: 28.02.2024
(73) Titulaire: SAFRAN AIRCRAFT ENGINES, 75015 Paris (FR)
(72) Inventeur: MALBOIS, Pierre André Gabriel, 77550 Moissy-Cramayel (FR)
(74) Mandataire: Santarelli
(86) Numéro de dépôt international: PCT/FR2022/050716
(87) Numéro de publication internationale: WO 2022/223916

(56) Documents cités:
- FR-A1- 2 709 342
- US-A- 5 396 761
- US-A- 5 813 221
- US-A- 6 112 516
- US-A1- 2006 032 231

## Description

### DOMAINE TECHNIQUE

La présente invention se rapporte au domaine des turboréacteurs destinés à la propulsion des aéronefs et comprenant un canal de postcombustion. Elle concerne plus particulièrement un dispositif d'injection de carburant pour canal de postcombustion et un turboréacteur comprenant un tel dispositif.

### ÉTAT DE LA TECHNIQUE ANTÉRIEURE

Des turboréacteurs de type connu, notamment ceux destinés au vol supersonique, comprennent dans leur partie arrière, également dénommée arrière-corps, un canal de postcombustion, également dénommé « canal de réchauffe », dans lequel le flux de gaz issu de la turbine peut subir une nouvelle combustion grâce à l'oxygène restant en son sein, avant de se détendre dans une tuyère d'éjection.

Des dispositifs d'injection de carburant, également dénommés bras injecteurs de carburant, sont en général agencés à l'entrée du canal de combustion pour vaporiser du carburant vers l'aval en direction de bras accroche-flammes.

Des dispositifs d'injection de carburant de type connu comprennent un tube de carburant présentant une paroi tubulaire pourvue d'orifices d'éjection de carburant, ainsi qu'un tube d'air présentant une paroi tubulaire pourvue d'orifices de passage d'air de refroidissement pour permettre la diffusion d'air relativement frais vers le tube de carburant et limiter ainsi la montée en température de ce dernier en fonctionnement. Un dispositif d'injection de carburant selon l'art antérieur est connu du document US 5,396,761.

Dans ce contexte, il existe un besoin pour un dispositif d'injection de carburant amélioré.

### EXPOSÉ DE L'INVENTION

L'invention propose à cet effet un dispositif d'injection de carburant pour postcombustion de turboréacteur, comprenant :
- une embase destinée à raccorder le dispositif d'injection de carburant à un carter de canal de postcombustion,
- un tube de carburant présentant une paroi tubulaire pourvue d'orifices d'éjection de carburant et définissant une surface externe du tube de carburant,
- un tube d'air présentant une paroi tubulaire pourvue d'orifices de passage d'air de refroidissement, et
- une enveloppe définissant un volume dans lequel le tube d'air s'étend avec jeu et à l'extérieur duquel s'étend le tube de carburant ;

dans lequel l'enveloppe comporte une portion côté tube de carburant s'étendant entre le tube d'air et le tube de carburant et présentant une surface externe concave en regard du tube de carburant, une portion côté opposé présentant une surface externe convexe, et deux portions latérales reliant chacune la portion côté tube de carburant à la portion côté opposé et présentent des surfaces externes respectives en continuité aérodynamique avec la surface externe du tube de carburant,
dans lequel le tube de carburant s'étend en regard et à distance de la portion côté tube de carburant de l'enveloppe,
dans lequel l'enveloppe définit des sorties d'air de refroidissement formées dans les portions latérales de l'enveloppe et qui raccordent le volume défini par l'enveloppe à l'extérieur du dispositif,
et dans lequel le tube de carburant, le tube d'air et l'enveloppe sont rigidement raccordés à l'embase indépendamment les uns des autres et s'étendent librement les uns par rapport aux autres à partir de l'embase.

L'invention permet ainsi une dilatation différentielle libre du tube de carburant, du tube d'air et de l'enveloppe, les uns par rapport aux autres. Les problèmes d'usure rencontrés avec les dispositifs de type connus, du fait des dilatations différentielles en fonctionnement, peuvent ainsi être évités ou tout au moins atténués.

Suivant d'autres aspects avantageux de l'invention, le dispositif de liaison présente une ou plusieurs des caractéristiques suivantes, prise(s) isolément ou suivant toutes les combinaisons techniquement possibles :
- les sorties d'air de refroidissement comprennent chacune au moins une rangée d'orifices d'éjection d'air débouchant au travers d'une surface externe de l'enveloppe ;
- les portions latérales de l'enveloppe convergent l'une vers l'autre en direction de la portion côté tube de carburant de l'enveloppe ;
- la paroi tubulaire du tube d'air comporte une portion côté tube de carburant qui est dépourvue d'orifices de passage d'air de refroidissement et en regard de laquelle les sorties d'air de refroidissement débouchent dans le volume défini par l'enveloppe ;
- les orifices de passage d'air de refroidissement sont agencés en plusieurs rangées s'étendant le long d'un axe central du tube d'air, lesdites rangées étant régulièrement réparties autour dudit axe central au sein d'une portion de la paroi tubulaire du tube d'air complémentaire de ladite portion côté tube de carburant de la paroi tubulaire du tube d'air ;
- la paroi tubulaire du tube de carburant comporte une portion côté tube d'air, ainsi que des portions latérales dans lesquelles sont formés les orifices d'éjection de carburant et qui sont plus épaisses que la portion côté tube d'air ;
- les sorties d'air de refroidissement sont agencées de part et d'autre d'un plan médian commun du tube de carburant et du tube d'air ;
- les sorties d'air de refroidissement présentent des directions d'éjection d'air qui interceptent, à l'extérieur du dispositif, un plan défini par des axes d'éjection de carburant respectivement définis par les orifices d'éjection de carburant ;
- les orifices d'éjection de carburant s'étendent orthogonalement au plan médian commun du tube de carburant et du tube d'air.

L'invention concerne également une partie arrière de turboréacteur, comprenant un canal de postcombustion, un carter de canal de postcombustion entourant ledit canal, et au moins un dispositif d'injection de carburant du type décrit ci-dessus raccordé au carter de canal de postcombustion, de sorte que le tube d'air soit situé en amont du tube de carburant.

Dans des modes de réalisation préférés de l'invention, l'embase de chaque dispositif d'injection de carburant comporte au moins un orifice de prélèvement d'air agencé pour alimenter le tube d'air en air issu d'un flux secondaire de turboréacteur.

L'invention concerne également un turboréacteur pour aéronef, comprenant une partie arrière du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une demi-vue schématique en section axiale d'un turboréacteur comprenant un canal de postcombustion ;
- la figure 2 est une demi-vue schématique en section axiale d'une partie arrière du turboréacteur de la figure 1, comprenant au moins un dispositif d'injection de carburant selon un mode de réalisation préféré de l'invention ;
- la figure 3 est une vue schématique en perspective d'une partie radialement externe d'un ensemble comprenant deux dispositifs d'injection de carburant de type connu ;
- la figure 4 est une vue schématique en perspective d'une partie radialement interne de l'un des dispositifs de l'ensemble de la figure 3 ;
- la figure 5 est une vue schématique en perspective d'un ensemble comprenant deux dispositifs d'injection de carburant selon le mode de réalisation préféré de l'invention ;
- la figure 6 est une vue schématique en perspective, et en coupe transversale, d'une partie médiane de l'un des dispositifs de la figure 5 ;
- la figure 7 est une vue schématique en perspective, et en coupe longitudinale, d'une partie radialement interne de l'un des dispositifs de la figure 5.

Dans l'ensemble de ces figures, des références identiques peuvent désigner des éléments identiques ou analogues.

### EXPOSÉ DÉTAILLÉ DE MODES DE RÉALISATION PRÉFÉRÉS

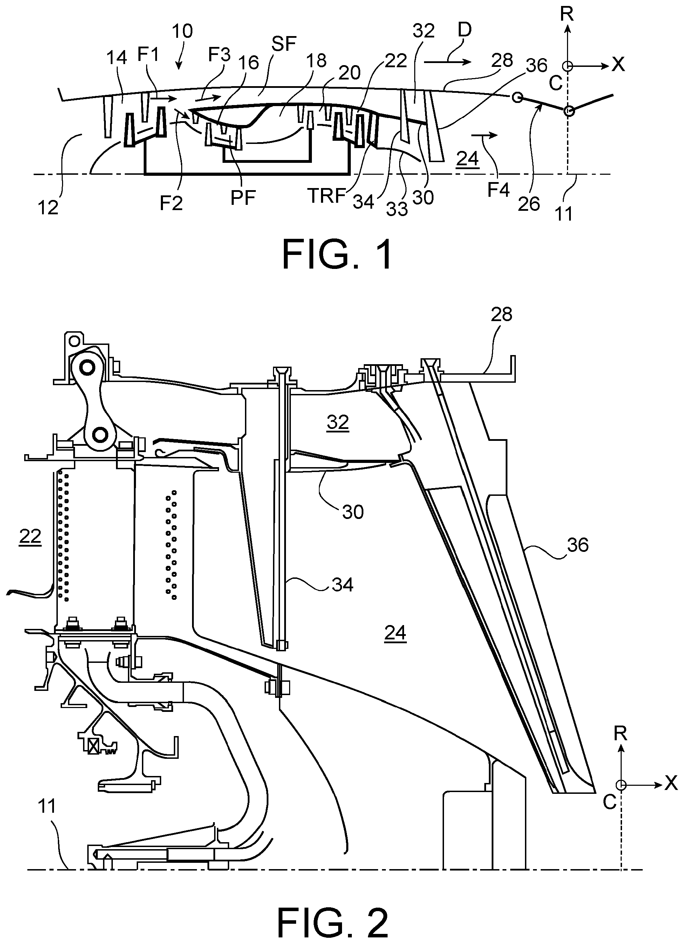

La figure 1 illustre un turboréacteur 10, par exemple à double corps et à double flux, destiné par exemple à la propulsion d'un aéronef apte au vol supersonique, et donc destiné en particulier à être installé dans le fuselage d'un tel aéronef. L'invention est bien entendu applicable à d'autres types de turboréacteurs.

Dans l'ensemble de cette description, la direction axiale X est la direction de l'axe longitudinal 11 du turboréacteur. Sauf lorsqu'il en est stipulé autrement, la direction radiale R est en tout point une direction orthogonale à l'axe longitudinal 11 et passant par ce dernier, et la direction circonférentielle C est en tout point une direction orthogonale à la direction radiale R et à l'axe longitudinal 11. Les qualificatifs « amont » et « aval » sont définis par référence à une direction générale D de l'écoulement des gaz dans le turboréacteur 10.

À titre illustratif, un tel turboréacteur 10 comprend, de l'amont vers l'aval, une entrée d'air 12, un compresseur basse pression 14, un compresseur haute pression 16, une chambre de combustion 18, une turbine haute pression 20, une turbine basse pression 22, un canal de postcombustion 24, et une tuyère 26 à géométrie variable, par exemple de type convergente-divergente. Ces organes du turboréacteur sont tous centrés selon l'axe longitudinal 11 du turboréacteur.

Un carter de canal de postcombustion 28 entoure ledit canal. De plus, une virole de séparation de flux 30, couramment dénommée « confluence », s'étend à l'intérieur du carter 28 concentriquement à ce dernier de manière à délimiter extérieurement l'entrée du canal de postcombustion 24 et à délimiter, avec le carter 28, un canal annulaire 32.

De manière bien connue, le compresseur haute pression 16, la chambre de combustion 18, et les turbines haute pression 20 et basse pression 22, définissent une veine primaire PF. Cette dernière est entourée par une veine secondaire SF de la turbomachine qui s'étend de l'amont vers l'aval, à partir d'une sortie du compresseur basse pression 14 jusqu'à une extrémité aval de la virole de séparation de flux 30, et qui inclut ainsi le canal annulaire 32 précité. Ainsi, en fonctionnement, de l'air F1 qui est entré par l'entrée d'air 12 et qui a été comprimé par le compresseur basse pression 14, se divise ensuite en un flux primaire F2 qui circule dans la veine primaire PF et en un flux secondaire F3 qui circule dans la veine secondaire SF. Le flux primaire F2 est alors comprimé davantage dans le compresseur haute pression 16, puis mélangé à du carburant et enflammé dans la chambre de combustion 18, avant de subir une détente dans la turbine haute pression 20 puis dans la turbine basse pression 22.

Les gaz de combustion constituant le flux primaire F2 en sortie de la turbine et le flux secondaire F3 se mélangent au sein du canal de postcombustion 24 à partir de l'extrémité aval de la virole de séparation de flux 30, et constituent ainsi un flux de gaz d'échappement F4 qui poursuit sa circulation dans le canal de postcombustion 24 puis s'échappe du turboréacteur 10 au travers de la sortie délimitée par la tuyère 26.

En régime de fonctionnement avec postcombustion, par exemple pour propulser un aéronef à des vitesses supersoniques, du carburant est injecté dans le flux de gaz au sein du canal de postcombustion 24, et le mélange ainsi constitué est enflammé au sein de ce canal afin de générer un surcroît de poussée.

À cet effet, des dispositifs d'injection de carburant 34 en forme générale de bras sont agencés à l'entrée du canal de postcombustion 24 pour vaporiser du carburant vers l'aval en direction de bras accroche-flammes 36 destinés à favoriser la stabilisation des flammes.

Comme cela apparaît plus clairement sur la figure 2, les dispositifs d'injection de carburant 34 et les bras accroche-flammes 36 sont raccordés fixement à leurs extrémités radialement externes au carter de canal de postcombustion 28, et les dispositifs 34 et bras 36 présentent des extrémités radialement internes libres.

Les dispositifs d'injection de carburant 34 et les bras accroche-flammes 36 s'étendent au travers d'ouvertures prévues à cet effet au sein de la virole de séparation de flux 30.

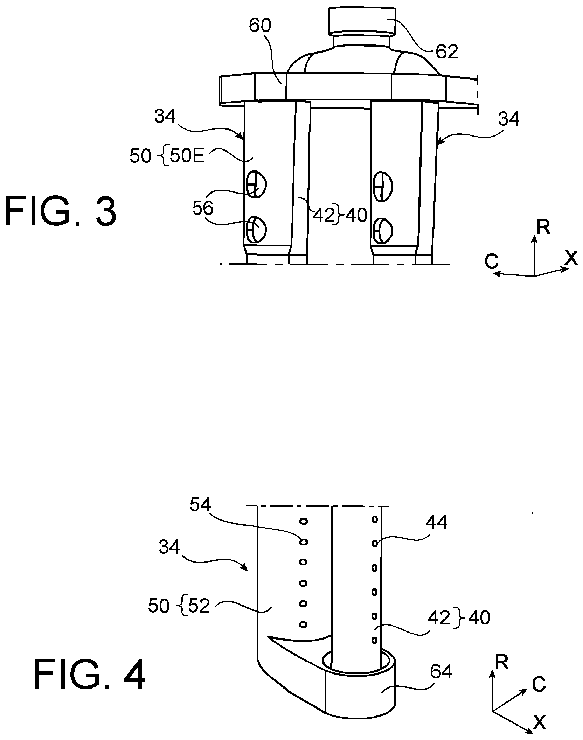

Le document FR2909438 divulgue sur ses figures 1 et 3 un exemple d'un tel dispositif d'injection de carburant.

En référence aux figures 3 et 4 annexées, un autre dispositif d'injection de carburant 34 de type connu comprend un tube de carburant 40 présentant une paroi tubulaire 42 pourvue d'orifices 44 destinés à éjecter ou pulvériser du carburant vers l'aval dans le flux primaire F2, ainsi qu'un tube d'air 50 présentant une paroi tubulaire 52 pourvue d'orifices 54 destinés à éjecter de l'air de refroidissement en direction du tube de carburant 40 afin de protéger thermiquement ce dernier par l'établissement d'un film d'air.

Dans une portion d'extrémité radialement externe 50E (figure 3) destinée à s'étendre dans le canal annulaire 32 à l'extérieur par rapport à la virole de séparation de flux 30, le tube d'air 50 présente un ou plusieurs orifices de prélèvement d'air 56 (par exemple au nombre de deux) par lesquels de l'air relativement frais du flux secondaire F3 peut pénétrer dans le tube d'air 50 et circuler radialement vers l'intérieur au sein de ce dernier pour finalement en être éjecté au travers des orifices 54.

Comme le montrent la figure 3, le tube de carburant 40 et le tube d'air 50 sont fixés conjointement par leurs extrémités radialement externes à une plateforme de fixation 60 destinée à raccorder le dispositif au carter 28, et comprenant une entrée de carburant 62 configurée pour alimenter en carburant le tube de carburant 40. Les deux tubes 40 et 50 sont en outre retenus l'un à l'autre par des douilles de centrage (dont l'une 64 est visible sur la figure 4) autorisant un glissement relatif des tubes 40 et 50 pour tenir compte des dilatations différentielles de ces derniers en fonctionnement. En effet, lors de la mise en route de la postcombustion en particulier, la mise en circulation de carburant relativement froid dans le tube de carburant 40 provoque des dilatations différentielles importantes.

Dans l'exemple illustré sur les figures 3 et 4, deux dispositifs d'injection de carburant 34 partagent une plateforme de fixation 60 commune destinée à raccorder conjointement les deux dispositifs au carter 28, l'ensemble ainsi constitué formant donc un double bras injecteur de carburant.

Il existe un besoin d'améliorer de tels dispositifs d'injection de carburant.

En effet, les inventeurs ont déterminé que l'injection de carburant et d'air de refroidissement dans une même direction n'est pas optimale eu égard à l'atomisation du carburant et rend cette atomisation tributaire de la dynamique de l'écoulement du flux primaire, notamment de la giration de ce flux.

De plus, les cycles thermodynamiques des moteurs, notamment ceux destinés aux aéronefs militaires, sont de plus en plus sévères thermiquement, en particulier en ce qui concerne le flux primaire.

De ce fait, des gradients thermiques élevés, occasionnés lors de l'injection de carburant relativement froid, sont susceptibles de causer la formation de criques thermiques au niveau des orifices d'éjection de carburant sur le tube de carburant. De telles criques ne sont visibles que lors d'un contrôle par ressuage et peuvent donc provoquer la rupture d'un tube de carburant si elles ne sont pas détectées à temps. Il en résulte un besoin d'inspections fréquentes, à l'origine de surcoûts.

En outre, du fait de tels cycles thermodynamiques, les zones de contacts entre les tubes de carburant et les douilles de centrage sont sujettes à une usure prématurée.

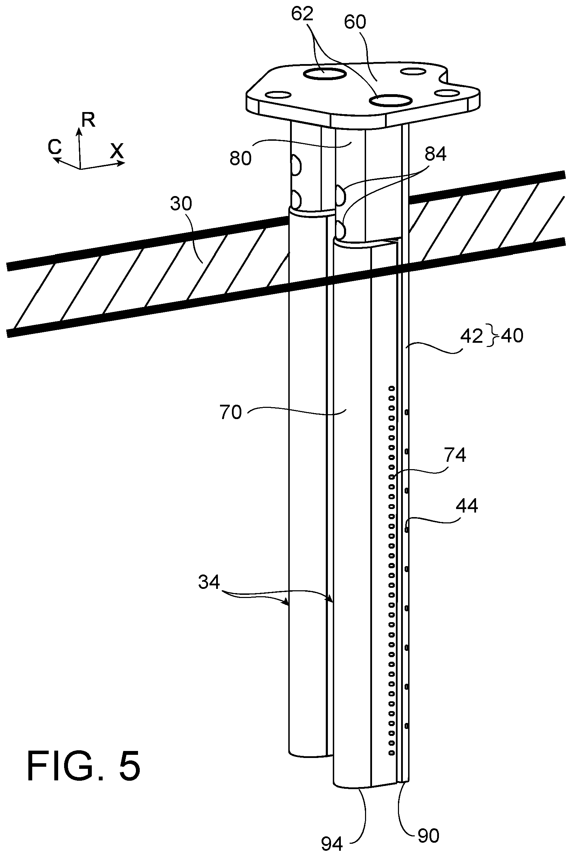

Les figures 5 à 7 illustrent un dispositif d'injection de carburant 34 selon un mode de réalisation préféré de l'invention, qui permet de remédier au moins en partie aux inconvénients précités.

À titre d'exemple, ce dispositif 34 est ici encore associé à un autre dispositif semblable par l'intermédiaire d'une plateforme de raccordement 60 commune, au sein d'un ensemble formant un double bras injecteur de carburant. La description qui suit est donc valable pour chacun des dispositifs 34.

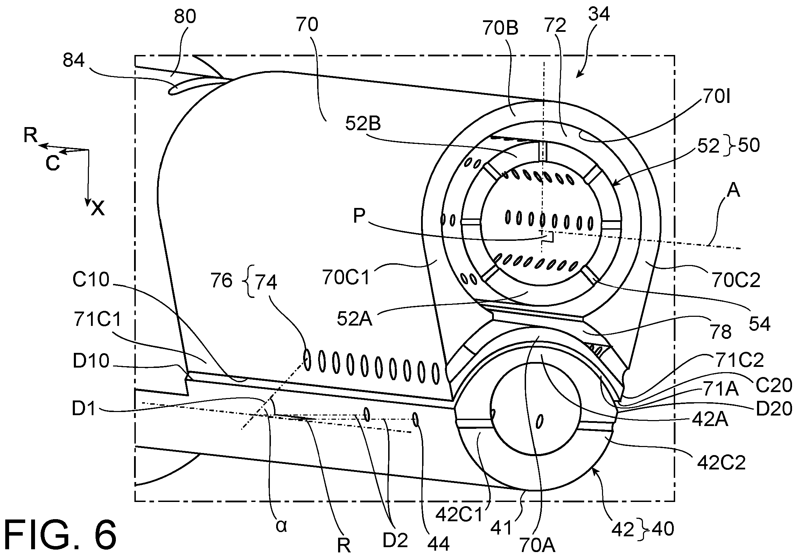

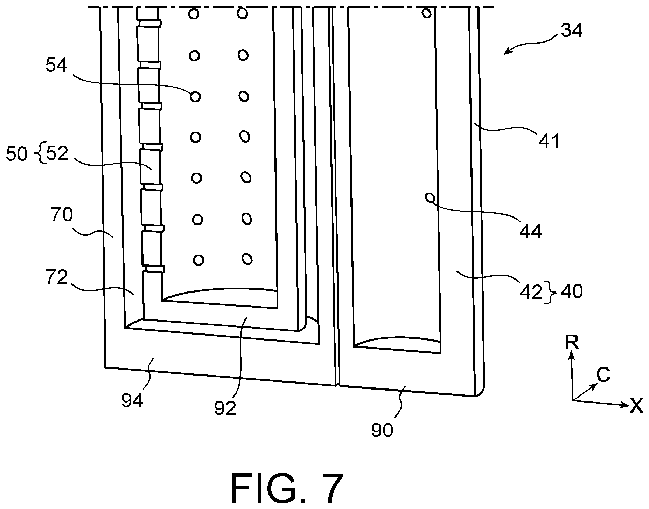

Comme cela apparaîtra plus clairement sur les figures 6 et 7, le dispositif 34 comprend un tube de carburant 40 présentant une paroi tubulaire 42 pourvue d'orifices d'éjection de carburant 44, un tube d'air 50 présentant une paroi tubulaire 52 pourvue d'orifices de passage d'air de refroidissement 54, et une enveloppe 70 définissant un volume 72 dans lequel le tube d'air 50 s'étend avec jeu, c'est-à-dire à distance de l'enveloppe 70. Le tube de carburant 40 de chaque dispositif 34 est par exemple alimenté en carburant au travers d'une entrée de carburant 62 correspondante prévue dans la plateforme de raccordement 60.

Le tube de carburant 40 s'étend à l'extérieur du volume 72, en regard et à distance d'une portion côté tube de carburant 70A de l'enveloppe 70, s'étendant entre le tube d'air 50 et le tube de carburant 40.

La portion côté tube de carburant 70A de l'enveloppe 70 présente une surface externe 71A concave en regard du tube de carburant 40, de sorte que la portion côté tube de carburant 70A de l'enveloppe 70 épouse sensiblement la forme du tube de carburant 40. La distance entre la surface externe 71A et le tube de carburant 40 est définie pour être petite mais permettre d'éviter un contact entre l'enveloppe 70 et le tube de carburant 40 en fonctionnement.

L'enveloppe 70 comporte en outre une portion côté opposé 70B présentant une surface externe convexe, et deux portions latérales 70C1, 70C2 reliant chacune la portion côté tube de carburant 70A à la portion côté opposé 70B.

La portion côté opposé 70B de l'enveloppe 70 est destinée à faire face au flux de gaz en fonctionnement.

Les portions latérales 70C1, 70C2 de l'enveloppe 70 présentent des surfaces externes respectives 71C1 et 71C2 en continuité aérodynamique avec une surface externe 41 du tube de carburant 40.

L'homme du métier comprendra par-là que les surfaces externes respectives 71C1 et 71C2 des portions latérales 70C1, 70C2 de l'enveloppe présentent chacune un bord C10, C20 en regard respectivement d'un bord correspondant D10, D20 de la surface externe 41 du tube de carburant 40, et qu'en tout point de chacun des bords C10, C20, ou au moins en tout point d'une portion majoritaire de chacun des bords C10, C20, un plan tangent à la surface externe considérée 71C1 ou 71C2 est également tangent à la surface externe 41 du tube de carburant 40.

La forme convexe de la portion côté opposé 70B et la continuité aérodynamique entre les portions latérales 70C1, 70C2 et le tube de carburant 40 permettent de réduire la perte de charge aérodynamique induite par le contournement du dispositif 34 par le flux de gaz.

En outre, dans l'exemple illustré, les portions latérales 70C1, 70C2 de l'enveloppe 70 convergent l'une vers l'autre en direction de la portion côté tube de carburant 70A de l'enveloppe, et donc en direction du tube de carburant 40. Cela permet une section de passage relativement importante au sein du tube d'air 50 sans compromettre l'aérodynamisme du dispositif.

D'une manière générale, en référence plus particulièrement à la figure 6, l'enveloppe 70 définit des sorties d'air de refroidissement 74 qui raccordent le volume 72 défini par l'enveloppe à l'extérieur du dispositif.

Dans l'exemple illustré, les sorties d'air de refroidissement 74 sont agencées de part et d'autre d'un plan médian P commun du tube de carburant 40 et du tube d'air 50.

De plus, les sorties d'air de refroidissement 74 comprennent par exemple chacune une rangée d'orifices d'éjection d'air 76 débouchant au travers de la surface externe de l'enveloppe, en l'occurrence au travers des surfaces externes 71C1 et 71C2 des portions latérales 70C1, 70C2 de l'enveloppe.

Dans le mode de réalisation illustré, les orifices d'éjection d'air 76 de chaque rangée débouchent conjointement dans une fente 78 continue correspondante formée au travers d'une surface interne 70I de l'enveloppe. Chaque sortie d'air de refroidissement 74 est ainsi constituée d'orifices d'éjection d'air 76 du côté extérieur et d'une fente 78 du côté intérieur.

D'une manière générale, les sorties d'air de refroidissement 74 présentent chacune de préférence une direction d'éjection d'air D1 qui intercepte, à l'extérieur du dispositif, un plan R correspondant défini par des axes d'éjection de carburant D2 respectifs des orifices d'éjection de carburant 44 correspondants (ceux situés du même côté que la sortie d'air de refroidissement 74 considérée).

Dans l'exemple illustré, la direction d'éjection d'air D1 est la direction d'axes d'éjection d'air respectivement définis par les orifices d'éjection d'air 76. Dans d'autres modes de réalisation, les orifices 76 peuvent ne pas être parallèles les uns aux autres, auquel cas chacun de ces orifices définit une direction d'éjection d'air D1 respective. Dans d'autres modes de réalisation, chaque sortie d'air de refroidissement 74 peut être de forme allongée longitudinalement, auquel cas la direction d'éjection d'air D1 correspondante est définie transversalement au plan médian P. Dans tous les cas, la ou les direction(s) d'éjection d'air D1 intercepte(nt) de préférence le plan R correspondant.

D'une manière générale, l'enveloppe 70 permet ainsi de canaliser de l'air de refroidissement issu des orifices 54 du tube d'air 50 en direction des jets de carburant issus des orifices 44 du tube de carburant 40, selon une incidence favorisant une atomisation par cisaillement des jets de carburant, d'autant plus que l'interception des jets de carburant se fait ainsi à proximité des orifices 44 du tube de carburant. À cet effet, un angle α formé entre chacune des directions d'éjection d'air D1 et le plan R est de préférence un angle aigu, par exemple compris entre 30 degrés et 60 degrés.

Dans le mode de réalisation illustré, les sorties d'air de refroidissement 74 sont formées dans l'enveloppe 70 elle-même, en l'occurrence dans les portions latérales 70C1 et 70C2 de l'enveloppe. En variante, ces sorties d'air peuvent être définies entre l'enveloppe 70 et le tube de carburant 40.

Dans le mode de réalisation illustré, la paroi tubulaire 52 du tube d'air 50 comporte une portion côté tube de carburant 52A qui est dépourvue d'orifices de passage d'air de refroidissement et en regard de laquelle les sorties d'air de refroidissement 74, en l'occurrence les fentes 78, débouchent dans le volume 72 défini par l'enveloppe 70.

De plus, les orifices de passage d'air de refroidissement 54 du tube d'air 50 sont agencés en plusieurs rangées s'étendant le long d'un axe central A du tube d'air. Lesdites rangées sont régulièrement réparties autour de l'axe central A au sein d'une portion 52B de la paroi tubulaire 52 du tube d'air complémentaire de ladite portion côté tube de carburant 52A.

Ainsi, l'air issu des orifices de passage d'air de refroidissement 54 doit circuler dans le volume 72 en contournant le tube d'air 50 avant d'atteindre les sorties d'air de refroidissement 74, ce qui permet d'assurer un refroidissement homogène de l'enveloppe 70 par l'air issu des orifices de passage d'air de refroidissement 54.

De plus, la multiplicité et la répartition des rangées d'orifices de passage d'air de refroidissement 54 permet de favoriser un refroidissement du tube d'air 50 par pompage thermique et un refroidissement de l'enveloppe 70 par impact de jets d'air.

Par ailleurs, la paroi tubulaire 42 du tube de carburant 40 comporte avantageusement une portion côté tube d'air 42A, ainsi que des portions latérales 42C1, 42C2 s'étendant à partir de la portion côté tube d'air 42A de deux côtés opposés du tube d'air 42 respectivement et dans lesquelles sont formés les orifices d'éjection de carburant 44.

Les portions latérales 42C1, 42C2 sont avantageusement plus épaisses que la portion côté tube d'air 42A. Le risque de formation et de propagation de criques thermiques au niveau des orifices 44 est ainsi limité au mieux.

À cet effet, la paroi tubulaire 42 présente par exemple une section interne circulaire et une section externe oblongue dans une direction orthogonale au plan médian P commun des tubes.

De plus, les orifices d'éjection de carburant 44 s'étendent de préférence orthogonalement au plan médian P commun des tubes. Dans ce cas, le plan R défini par les axes d'éjection de carburant D2 est donc orthogonal au plan médian P.

Par ailleurs, en référence aux figures 5 et 6, le dispositif 34 comporte une embase 80 de forme tubulaire destinée à raccorder le dispositif au carter de canal de postcombustion 28, par exemple par l'intermédiaire de la plateforme de raccordement 60.

Le tube de carburant 40, le tube d'air 50 et l'enveloppe 70 sont rigidement raccordés à l'embase 80 indépendamment les uns des autres et s'étendent librement les uns par rapport aux autres à partir de l'embase 80. L'invention permet ainsi une dilatation différentielle totalement libre de chacun de ces éléments par rapport aux autres. Les problèmes d'usure rencontrés avec les dispositifs de type connus, du fait des dilatations différentielles en fonctionnement, peuvent ainsi être évités.

À cet effet, le tube d'air 50 est par exemple monté serré dans l'embase 80 ou réalisé d'un seul tenant avec cette dernière par exemple par fonderie ou par fusion laser, tandis que le tube de carburant 40 et l'enveloppe 70 sont par exemple fixés sur l'ensemble ainsi formé.

L'embase 80 comporte par exemple au moins un orifice de prélèvement d'air 84, en l'occurrence deux tels orifices, destiné(s) à prélever de l'air dans le flux secondaire F3, et au moins un passage interne (non visible sur les figures) raccordant chaque orifice 84 au tube d'air 50 pour alimenter ce dernier en air de refroidissement.

En référence à la figure 9, les tubes 40, 50 et l'enveloppe 70 comprennent des fonds respectifs 90, 92, 94 à leurs extrémités libres.

En particulier, le fond 92 du tube d'air 50 s'étend à distance du fond 94 de l'enveloppe 70 de sorte que, même en fonctionnement, lesdits fonds 92 et 94 n'entrent pas en contact l'un avec l'autre malgré les dilatations différentielles éventuelles affectant le tube d'air 50 et l'enveloppe 70.

## Revendications

1. Dispositif d'injection de carburant (34) pour postcombustion de turboréacteur, comprenant :
- une embase (80) destinée à raccorder le dispositif d'injection de carburant (34) à un carter de canal de postcombustion (28),
- un tube de carburant (40) présentant une paroi tubulaire (42) pourvue d'orifices d'éjection de carburant (44) et définissant une surface externe (41) du tube de carburant,
- un tube d'air (50) présentant une paroi tubulaire (52) pourvue d'orifices de passage d'air de refroidissement (54), et
- une enveloppe (70) définissant un volume (72) dans lequel le tube d'air (50) s'étend avec jeu et à l'extérieur duquel s'étend le tube de carburant (40),
dans lequel l'enveloppe (70) comporte une portion côté tube de carburant (70A) s'étendant entre le tube d'air (50) et le tube de carburant (40) et présentant une surface externe (71A) concave en regard du tube de carburant (40), une portion côté opposé (70B) présentant une surface externe convexe, et deux portions latérales (70C1, 70C2) reliant chacune la portion côté tube de carburant (70A) à la portion côté opposé (70B) et présentent des surfaces externes (71C1, 71C2) respectives en continuité aérodynamique avec la surface externe (41) du tube de carburant (40) ;
dans lequel le tube de carburant (40) s'étend en regard et à distance de la portion côté tube de carburant (70A) de l'enveloppe,
dans lequel l'enveloppe (70) définit des sorties d'air de refroidissement (74) formées dans les portions latérales (70C1, 70C2) de l'enveloppe et qui raccordent le volume (72) défini par l'enveloppe à l'extérieur du dispositif,
et dans lequel le tube de carburant (40), le tube d'air (50) et l'enveloppe (70) sont rigidement raccordés à l'embase (80) indépendamment les uns des autres et s'étendent librement les uns par rapport aux autres à partir de l'embase (80).

2. Dispositif selon la revendication 1, dans lequel les sorties d'air de refroidissement (74) comprennent chacune au moins une rangée d'orifices d'éjection d'air (76) débouchant au travers d'une surface externe de l'enveloppe.

3. Dispositif selon la revendication 1 ou 2, dans lequel les portions latérales (70C1, 70C2) de l'enveloppe (70) convergent l'une vers l'autre en direction de la portion côté tube de carburant (70A) de l'enveloppe.

4. Dispositif selon l'une quelconque des revendications 1 à 3, dans lequel la paroi tubulaire (52) du tube d'air (50) comporte une portion côté tube de carburant (52A) qui est dépourvue d'orifices de passage d'air de refroidissement et en regard de laquelle les sorties d'air de refroidissement (74) débouchent dans le volume (72) défini par l'enveloppe (70).

5. Dispositif selon la revendication 4, dans lequel les orifices de passage d'air de refroidissement (54) sont agencés en plusieurs rangées s'étendant le long d'un axe central (A) du tube d'air (50), lesdites rangées étant régulièrement réparties autour dudit axe central au sein d'une portion (52B) de la paroi tubulaire du tube d'air complémentaire de ladite portion côté tube de carburant (52A) de la paroi tubulaire du tube d'air.

6. Dispositif selon l'une quelconque des revendications 1 à 5, dans lequel la paroi tubulaire (42) du tube de carburant (40) comporte une portion côté tube d'air (42A), ainsi que des portions latérales (42C1, 42C2) dans lesquelles sont formés les orifices d'éjection de carburant (44) et qui sont plus épaisses que la portion côté tube d'air (42A).

7. Dispositif selon l'une quelconque des revendications 1 à 6, dans lequel les sorties d'air de refroidissement (74) sont agencées de part et d'autre d'un plan médian (P) commun du tube de carburant (40) et du tube d'air (50).

8. Dispositif selon la revendication 7, dans lequel les sorties d'air de refroidissement (74) présentent chacune une direction d'éjection d'air (D1) qui intercepte, à l'extérieur du dispositif, un plan (R) défini par des axes d'éjection de carburant (D2) respectifs des orifices d'éjection de carburant (44) correspondants.

9. Dispositif selon la revendication 7 ou 8, dans lequel les orifices d'éjection de carburant (44) s'étendent orthogonalement au plan médian (P) commun du tube de carburant (40) et du tube d'air (50).

10. Partie arrière de turboréacteur, comprenant un canal de postcombustion (24), un carter de canal de postcombustion (28) entourant ledit canal, et au moins un dispositif d'injection de carburant (34) selon l'une quelconque des revendications 1 à 9 raccordé au carter de canal de postcombustion (28), de sorte que le tube d'air (50) soit situé en amont du tube de carburant (40).

11. Partie arrière de turboréacteur selon la revendication 10, dans laquelle l'embase (80) de chaque dispositif d'injection de carburant (34) comporte au moins un orifice de prélèvement d'air (84) agencé pour alimenter le tube d'air (50) en air issu d'un flux secondaire de turboréacteur (F3).

12. Turboréacteur pour aéronef, comprenant une partie arrière selon la revendication 10 ou 11.

## Patentansprüche

1. Kraftstoffeinspritzvorrichtung (34) für die Nachverbrennung von Turboreaktoren, umfassend:
- einen Sockel (80), der dazu bestimmt ist, die Kraftstoffeinspritzvorrichtung (34) mit einem Nachbrennkanalgehäuse (28) zu verbinden,
- ein Kraftstoffrohr (40), das eine Rohrwand (42) besitzt, die mit Kraftstoffauswurföffnungen (44) versehen ist und eine Außenfläche (41) des Kraftstoffrohrs definiert,
- ein Luftrohr (50), das eine Rohrwand (52) besitzt, die mit Kühlluftdurchlassöffnungen (54) versehen ist, und
- eine Hülle (70), die ein Volumen (72) definiert, in dem sich das Luftrohr (50) mit Spiel erstreckt und außerhalb dessen sich das Kraftstoffrohr (40) erstreckt,
wobei die Hülle (70) einen kraftstoffrohrseitigen Abschnitt (70A) aufweist, der sich zwischen dem Luftrohr (50) und dem Kraftstoffrohr (40) erstreckt und eine gegenüber dem Kraftstoffrohr (40) konkave Außenfläche (71A) besitzt, einen gegenüberliegenden seitigen Abschnitt (70B), der eine konvexe Außenfläche besitzt, und zwei seitliche Abschnitte (70C1, 70C2), die jeweils den kraftstoffrohrseitigen Abschnitt (70A) mit dem gegenüberliegenden seitigen Abschnitt (70B) verbinden und Außenflächen (71C1, 71C2) in jeweils aerodynamischer Kontinuität mit der Außenfläche (41) des Kraftstoffrohrs (40) besitzen;
wobei sich das Kraftstoffrohr (40) gegenüber und von dem kraftstoffrohrseitigen Abschnitt (70A) der Hülle entfernt erstreckt,
wobei die Hülle (70) Kühlluftauslässe (74) definiert, die in den seitlichen Abschnitten (70C1, 70C2) der Hülle gebildet sind und die das von der Hülle definierte Volumen (72) mit der Außenseite der Vorrichtung verbinden,
und wobei das Kraftstoffrohr (40), das Luftrohr (50) und die Hülle (70) unabhängig voneinander starr mit dem Sockel (80) verbunden sind und sich von dem Sockel (80) frei zueinander erstrecken.

2. Vorrichtung nach Anspruch 1, wobei die Kühlluftauslässe (74) jeweils mindestens eine Reihe von Luftauswurföffnungen (76) umfassen, die durch eine Außenfläche der Hülle münden.

3. Vorrichtung nach Anspruch 1 oder 2, wobei die seitlichen Abschnitte (70C1, 70C2) der Hülle (70) in Richtung des kraftstoffrohrseitigen Abschnitts (70A) der Hülle zueinander konvergieren.

4. Vorrichtung nach einem der Ansprüche 1 bis 3, wobei die Rohrwand (52) des Luftrohrs (50) einen kraftstoffrohrseitigen Abschnitt (52A) aufweist, der über keine Kühlluftdurchlassöffnungen verfügt und gegenüber dem die Kühlluftauslässe (74) in das durch die Hülle (70) definierte Volumen (72) münden.

5. Vorrichtung nach Anspruch 4, wobei die Kühlluftdurchlassöffnungen (54) in mehreren Reihen angeordnet sind, die sich entlang einer Mittelachse (A) des Luftrohrs (50) erstrecken, wobei die Reihen gleichmäßig um die Mittelachse innerhalb eines Abschnitts (52B) der Rohrwand des ergänzenden Luftrohrs des kraftstoffrohrseitigen Abschnitts (52A) der Rohrwand des Luftrohrs verteilt sind.

6. Vorrichtung nach einem der Ansprüche 1 bis 5, wobei die Rohrwand (42) des Kraftstoffrohrs (40) einen luftrohrseitigen Abschnitt (42A) sowie seitliche Abschnitte (42C1, 42C2) aufweist, in denen die Kraftstoffauswurföffnungen (44) ausgebildet sind und die dicker sind als der luftrohrseitige Abschnitt (42A).

7. Vorrichtung nach einem der Ansprüche 1 bis 6, wobei die Kühlluftauslässe (74) auf beiden Seiten einer gemeinsamen Mittelebene (P) des Kraftstoffrohrs (40) und des Luftrohrs (50) angeordnet sind.

8. Vorrichtung nach Anspruch 7, wobei die Kühlluftauslässe (74) jeweils eine Luftauswurfrichtung (D1) besitzen, die außerhalb der Vorrichtung eine durch jeweilige Kraftstoffauswurfachsen (D2) der entsprechenden Kraftstoffauswurföffnungen (44) definierte Ebene (R) abfängt.

9. Vorrichtung nach Anspruch 7 oder 8, wobei sich die Kraftstoffauswurföffnungen (44) orthogonal zu der gemeinsamen Mittelebene (P) des Kraftstoffrohrs (40) und des Luftrohrs (50) erstrecken.

10. Hinterer Teil eines Turboreaktors, umfassend einen Nachbrennkanal (24), ein Nachbrennkanalgehäuse (28), das den Kanal umgibt, und mindestens eine Kraftstoffeinspritzvorrichtung (34) nach einem der Ansprüche 1 bis 9, die mit dem Nachbrennkanalgehäuse (28) verbunden ist, so dass sich das Luftrohr (50) vor dem Kraftstoffrohr (40) befindet.

11. Hinterer Teil eines Turboreaktors nach Anspruch 10, wobei der Sockel (80) jeder Kraftstoffeinspritzvorrichtung (34) mindestens eine Luftentnahmeöffnung (84) aufweist, die so angeordnet ist, dass sie das Luftrohr (50) mit Luft versorgt, die aus einem Sekundärstrom eines Turboreaktors (F3) stammt.

12. Turboreaktor für ein Flugzeug, umfassend einen hinteren Teil nach einem der Ansprüche 10 oder 11.

## Claims

1. A fuel injection device (34) for a turbojet engine afterburner, comprising:
- a base (80) intended to connect the fuel injection device (34) to an afterburner channel casing (28),
- a fuel tube (40) having a tubular wall (42) provided with fuel ejection ports (44) and defining an outer surface (41) of the fuel tube,
- an air tube (50) having a tubular wall (52) provided with cooling air passage ports (54), and
- a casing (70) defining a volume (72) in which the air tube (50) extends with some clearance and outside of which the fuel tube (40) extends,
wherein the casing (70) includes a fuel tube side portion (70A) extending between the air tube (50) and the fuel tube (40) and having a concave outer surface (71A) opposite the fuel tube (40), an opposite side portion (70B) having a convex outer surface, and two lateral portions (70C1, 70C2) each connecting the fuel tube side portion (70A) to the opposite side portion (70B) and having respective outer surfaces (71C1, 71C2) in aerodynamic continuity with the outer surface (41) of the fuel tube (40);
wherein the fuel tube (40) extends opposite and at a distance from the fuel tube side portion (70A) of the casing,
wherein the casing (70) defines cooling air outlets (74) formed in the lateral portions (70C1, 70C2) of the casing and which connect the volume (72) defined by the casing to the outside of the device,
and wherein the fuel tube (40), the air tube (50) and the casing (70) are rigidly connected to the base (80) independently of each other and extend freely relative to each other from the base (80).

2. The device according to claim 1, wherein each of the cooling air outlets (74) comprises at least one row of air ejection ports (76) opening throughout an outer surface of the casing.

3. The device according to claim 1 or 2, wherein the lateral portions (70C1, 70C2) of the casing (70) converge towards each other in the direction of the fuel tube side portion (70A).

4. The device according to any one of claims 1 to 3, wherein the tubular wall (52) of the air tube (50) includes a fuel tube side portion (52A) which is free of cooling air passage ports and opposite which the cooling air outlets (74) open into the volume (72) defined by the casing (70).

5. The device according to claim 4, wherein the cooling air passage ports (54) are arranged in several rows extending along a central axis (A) of the air tube (50), said rows being evenly distributed around said central axis within a portion (52B) of the tubular wall of the air tube complementary to said fuel tube side portion (52A) of the tubular wall of the air tube.

6. The device according to any one of claims 1 to 5, wherein the tubular wall (42) of the fuel tube (40) includes an air tube side portion (42A), as well as lateral portions (42C1, 42C2) in which the fuel ejection ports (44) are formed and which are thicker than the air tube side portion (42A).

7. The device according to any one of claims 1 to 6, wherein the cooling air outlets (74) are arranged on either side of a common midplane (P) of the fuel tube (40) and of the air tube (50).

8. The device according to claim 7, wherein each of the cooling air outlets (74) has an air ejection direction (D1) which intercepts, outside the device, a plane (R) defined by respective fuel ejection axes (D2) of the corresponding fuel ejection ports (44).

9. The device according to claim 7 or 8, wherein the fuel ejection ports (44) extend orthogonally to the common midplane (P) of the fuel tube (40) and of the air tube (50).

10. A turbojet engine rear portion, comprising an afterburner channel (24), an afterburner channel casing (28) surrounding said channel, and at least one fuel injection device (34) according to any one of claims 1 to 9 connected to the afterburner channel casing (28), so that the air tube (50) is located upstream of the fuel tube (40).

11. The turbojet engine rear portion according to claim 10, wherein the base (80) of each fuel injection device (34) includes at least one air intake port (84) arranged to supply the air tube (50) with air derived from a turbojet engine secondary flow (F3).

12. An aircraft turbojet engine, comprising a rear portion according to claim 10 or 11.
